# EUROPEAN PATENT APPLICATION

(11) **EP 4 717 344 A1**
(43) Date of publication of application: **01.04.2026**
(21) Application number: 23947441.4
(22) Date of filing: 27.12.2023
(51) Int. Cl.: B01D 53/14, B01D 53/62

(54) **CARBON DIOXIDE ABSORBENT, PREPARATION METHOD THEREFOR AND USE THEREOF**

(30) Priority: 31.07.2023 WO PCT/CN2023/110298; 21.09.2023 CN 202311222921
(71) Applicant: China Petroleum & Chemical Corporation, Beijing 100728 (CN); Sinopec Nanjing Research Institute of Chemical Industry Co., Ltd., Nanjing, Jiangsu 210048 (CN); Sinopec Nanjing Chemical Industries Co., Ltd., Nanjing, Jiangsu 210048 (CN)
(72) Inventor: ZHAO, Jingyan, Nanjing, Jiangsu 210048 (CN); JI, Yan, Nanjing, Jiangsu 210048 (CN); HUANG, Hangen, Nanjing, Jiangsu 210048 (CN); GUO, Benshuai, Nanjing, Jiangsu 210048 (CN); YE, Ning, Nanjing, Jiangsu 210048 (CN); LI, Zhongyu, Nanjing, Jiangsu 210048 (CN)
(74) Representative: karo IP
(86) International application number: PCT/CN2023/142364
(87) International publication number: WO 2025/025504

(57) **Abstract**

A carbon dioxide absorbent, a preparation method therefor and a use thereof. The absorbent comprises a component A, a component B and a solvent, the component A being an imidazole-modified amino acid ionic liquid; a cation of the ionic liquid is an imidazole cation, the imidazole cation having a structure as shown in formula (I), where R1, R2, R3, R4 and R5 each independently being hydrogen or a C1-C10 straight-chain or branched alkyl; the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol thereof being 5-15%. Use of the carbon dioxide absorbent in capturing carbon dioxide can improve selectivity and acid gas load during carbon dioxide capture, and reduce energy consumption.

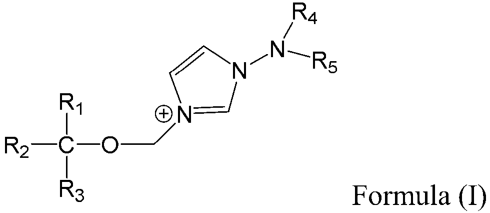

## Description

### CROSS-REFERENCE TO RELATED APPLICATIONS

The application claims the benefit of the Patent Cooperation Treaty (PCT) international application No. "PCT/CN2023/110298" filed on July 31, 2023 and the China patent application No. "202311222921.8" filed on September 21, 2023, the contents of which are specifically and entirely incorporated herein by reference.

### TECHNICAL FIELD

The present invention relates to the technical field of carbon dioxide capture, in particular to a carbon dioxide absorbent, a preparation method therefor and a use thereof.

### BACKGROUND ART

The emission of a large amount of CO₂ has been a major contributor to global warming. The conventional atmospheric pressure CO₂ separation processes typically remove CO₂ by cryogenic absorption and high temperature desorption, or recover a portion of thermal energy by heat pumps, mechanical vapor recompression and other means to fulfill the purpose of saving energy and reducing consumption.

There are many mature processes and methods for separating CO₂ from gaseous mixtures at present, such as chemical absorption method, physical absorption method, adsorption method, membrane separation method, each of the methods has its application range. Among these methods, chemical absorption method is currently the most commonly used process. In the carbon capture technology with a chemical absorption method, the properties of chemical absorbents determine the CO₂ capture efficiency and the energy consumption of the system. The conventional chemical absorption method, which uses hot potash solution, aqueous ammonia, and alcoholamine solutions as absorbents in the carbon capture process, has desirable performance for CO₂ capture and relatively mature technologies. However, the chemical absorption method has the defects such as high energy consumption, the absorbents have poor oxidation resistance, strong corrosion, and are prone to degradation and deterioration. The decarburization absorbents include the mixed amines mainly composed of Monoethanolamine (MEA), Diethanolamine (DEA), N-methyldiethanolamine (MDEA), or the formulation absorbent. MEA and DEA are a primary amine and a secondary amine respectively, have strong alkalinity, can react with CO₂ rapidly and exhibit desirably absorption rates, and are commonly used in the circumstances of CO₂ partial pressure below 0.2MPa in the gas mixture, however, restrained by the strong corrosion of MEA and DEA, the typical concentration MEA and DEA solution is within the range of 15-25%, the acid gas load is low, it requires a high circulation amount of the solution for removing a large amount of CO₂, which results in high regeneration heat consumption and energy consumption. When the CO₂ partial pressure is above 0.2MPa, the various formulations of absorbents with a main component of MDEA are generally used, but the traditional formulations of absorbents have a contradiction between decarburization purification degree and treatment load.

### SUMMARY OF THE INVENTION

The present invention aims overcome the defects with respect to the high loss, high energy consumption and strong corrosivity of carbon dioxide capture in the prior art, and provides a carbon dioxide absorbent, a preparation method therefor and a use thereof, the invention can improve selectivity and acid gas load in the chemical absorption method for capturing carbon dioxide and reduce energy consumption.

In order to achieve the above object, the first aspect of the present invention provides a carbon dioxide absorbent comprising a component A, a component B and a solvent, wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 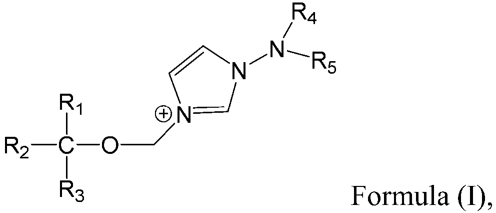 wherein R₁, R₂, R₃, R₄ and R₅ are each independently hydrogen or C₁-C₁₀ straight-chain or branched alkyl.

The second aspect of the invention provides a preparation method for a carbon dioxide absorbent, the preparation method comprises: mixing a component A, a component B and a solvent to obtain a carbon dioxide absorbent; wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 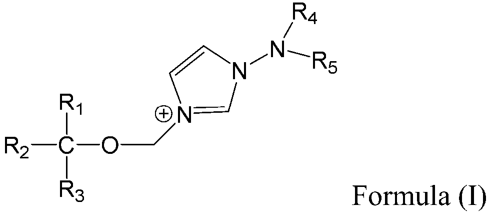 wherein R₁, R₂, R₃, R₄ and R₅ are each independently hydrogen or C₁-C₁₀ straight-chain or branched alkyl.

The third aspect of the invention provides use of the aforementioned absorbent in capturing carbon dioxide.

The fourth aspect of the invention provides a method of capturing carbon dioxide, the method comprises: capturing carbon dioxide with the aforementioned absorbent.

Due to the technical scheme, the invention produces the following favorable technical effects:
(1) The carbon dioxide absorbent provided by the invention comprises an ionic liquid including a cation being an imidazole cation and an anion being sarcosine, lysine, valine or alanine, when the ionic liquid is complexed with aminoethylethanolamine, triethanolamine or N-methyldiethanolamine and an aqueous solution of alcohol, it can improve selectivity and acid gas load during carbon dioxide capture, and reduce energy consumption.
(2) The absorbent of the invention has a large reduction in the cost, energy consumption, and loss, and a substantive improvement in the capturing capability and stability, when the absorbent is used for capturing carbon dioxide

### BRIEF DESCRIPTION OF THE DRAWINGS

FIG. 1 illustrates the nuclear magnetic resonance carbon spectrogram of the carbon dioxide absorbent prepared in Example 1 of the invention;
FIG. 2 illustrates the nuclear magnetic resonance carbon spectrogram of the carbon dioxide absorbent prepared in Comparative Example 7 of the invention;
FIG. 3 illustrates the nuclear magnetic resonance carbon spectrogram of the carbon dioxide absorbent prepared in Comparative Example 8 of the invention.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect the invention provides a carbon dioxide absorbent comprising a component A, a component B and a solvent, wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 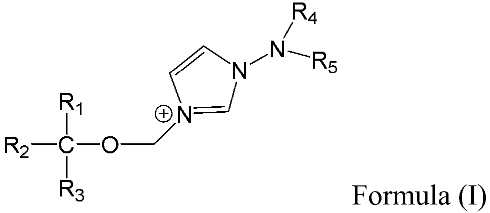 wherein R₁, R₂, R₃, R₄ and R₅ are each independently hydrogen or C₁-C₁₀ straight-chain or branched alkyl.

In the present invention, the formulation of said absorbent can be determined by judging the presence or absence of the primary functional group such as imidazolyl, etheroxyl group, amino groups through infrared spectroscopy, and deciding the attached groups based on the chemical shift of carbon atom connected with the N⁺ on the imidazole ring in the nuclear magnetic resonance carbon spectrogram.

In the present invention, after carbon dioxide is absorbed by the carbon dioxide absorbent, the amino groups on the cation will react with carbon dioxide to generate carbaminate, and the absorption before and after the reaction is detected by the infrared spectroscopy. The invention utilizes the ionic liquid having excellent characteristics (e.g., very low vapor pressure, high thermal stability, strong solvency, stable properties, non-flammability, and low corrosiveness), and selects an ionic liquid including a cation being an imidazole cation and an anion being sarcosine, lysine, valine or alanine, when the ionic liquid is complexed with aminoethylethanolamine, triethanolamine or N-methyldiethanolamine and an aqueous solution of alcohol, the absorbent for capturing carbon dioxide may combine the advantages of low energy consumption of physical absorption method and strong decarbonization capability of chemical absorption method, and effectively overcome the defects of low selectivity, low acid gas load, and high solvent loss in the existing CO₂ capture method.

The invention can improve capture properties and reduce viscosity by mixing the ionic liquid with the alcoholamine based molecules. The complexed ionic liquid has a large potential for the use for CO₂ absorption.

In the invention, the examples of C₁-C₁₀ straight-chain or branched alkyl may be any one of methyl, ethyl, n-propyl, isopropyl, n-butyl, sec-butyl, isobutyl, t-butyl, n-pentyl, isopentyl, t-pentyl, neopentyl, n-hexyl, isohexyl, n-heptyl, isoheptyl, 2-methylhexyl, 2-ethylhexyl, 1-methylheptyl, 2-methylheptyl, n-octyl, iso-octyl, n-nonyl, iso-nonyl and 3,5,5-trimethylhexyl.

In some embodiments of the invention, R₁, R₂, R₃, R₄ and R₅ are each independently hydrogen or C₁-C₆ straight-chain or branched alkyl; preferably hydrogen or C₁-C₄ straight-chain or branched alkyl; more preferably hydrogen, methyl or ethyl.

When R₁, R₂, R₃, R₄ and R₅ are each independently hydrogen, the imidazole cation is 3-etheroxy-1-aminoimidazole cation having the structure represented by formula (1):

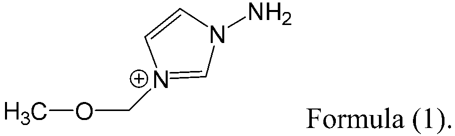

In the invention, the molar ratio of the imidazole cation and the amino acid anion is 1:1.

In the present invention, the ionic liquid includes, but is not limited to, 3-etheroxy-l-aminoimidazole sarcosine ionic liquid, 3-etheroxy-l-aminoimidazole lysine ionic liquid, 3-etheroxy-l-aminoimidazole valine ionic liquid, and 3-etheroxy-l-aminoimidazole alanine ionic liquid.

In some specific embodiments, the preparation method of the ionic liquid is as follows: the ionic liquid starting materials R₁-imidazole (R₁ is amino) and R₂-Br (R₂ is etheroxy) are accurately weighed, wherein R₁-imidazole and R₂-Br in a molar ratio of 1:1 are dissolved in absolute ethanol at room temperature, the mixture is placed a three necked flask, which is then placed in a water bath thermostatic bath in a fuming cupboard. The stirring and reflux reaction is performed under the protection of N₂ and the temperature of 15-25°C. After the reaction is finished, the ethanol is evaporated in reduced pressure using a rotary evaporator at 38-42°C, and the residue is dissolved in deionized water. KOH solids are added in 10 batches under the stirring condition, and the reaction system is exothermic. After the addition of KOH is complete, the reaction is continued for 60-62min under the stirring condition, the water is evaporated in reduced pressure using a rotary evaporator at 60-65°C, imidazole bromide is extracted with ethanol-tetrahydrofuran, and the ethanol-tetrahydrofuran is evaporated in reduced pressure. The products obtained after the reduced pressure distillation are mixed with 2-2.2 volumes of ethanol-water, 1.1-1.15 molar amount of amino acid (sarcosine, lysine, valine or alanine) is added, the heating reaction is carried out at 30-35°C for 24-24.5h, the reaction product is taken out and cooled to room temperature, filtered, the filtrate is evaporated to dryness, then extracted with absolute ethanol, and filtered, and the resulting filtrate is subjected to rotary evaporation to remove ethanol to obtain the ionic liquid.

In some embodiments of the invention, the sum of said component A and said component B is 25-40wt%, such as 25wt%, 28wt%, 30wt%, 32wt%, 35wt%, 38wt%, 40wt%, and any value within the range consisting of two numerical values thereof, preferably 30-35wt%, based on the total mass of the absorbent.

In some embodiments of the invention, the mass ratio of said component A and said component B is 1: (0.8-2.5), for example, 1:0.8, 1:0.9, 1:1, 1:1.1, 1:1.2, 1:3, 1:1.4, 1:1.5, and any value within the range consisting of two numerical values thereof, preferably 1: (1-1.5).

In some embodiments of the invention, said component A is 12-15wt%, such as 12wt%, 13wt%, 14wt%, 15wt%, and any value within the range consisting of two numerical values thereof, preferably 13-14wt%, and said component B is 12-30wt%, for example, 12wt%, 13wt%, 15wt%, 17wt%, 20wt%, 22wt%, 25wt%, 28wt%, 30wt%, and any value within the range consisting of two numerical values thereof, preferably 13-20wt%, based on the total mass of the absorbent,.

In some embodiments of the invention, the alcohol in the aqueous solution of alcohol is one or more selected from the group consisting of propylene glycol, ethanol and ethylene glycol.

In some embodiments of the present invention, the solvent is an aqueous ethanol solution with a volume concentration of 8-12%, further preferably an aqueous ethanol solution with a volume concentration of 10%.

The second aspect of the invention provides a preparation method for a carbon dioxide absorbent, the preparation method comprises: mixing a component A, a component B and a solvent to obtain a carbon dioxide absorbent; wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 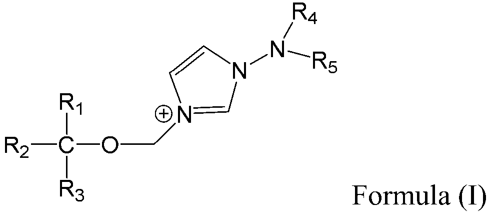 wherein R₁, R₂, R₃, R₄ and R₅ are each independently hydrogen or C₁-C₁₀ straight-chain or branched alkyl.

In some preferred embodiments of the invention, the preparation method specifically comprises the following steps:
Initially mixing a component B with a solvent to obtain a mixed liquor; then blending the mixed liquor with a component A to prepare a carbon dioxide absorbent.

The invention provides a method of capturing carbon dioxide by complexing an ionic liquid, alcoholamine with a solvent. The absorbent prepared with the method of the invention has a larger acid gas load and higher capture rate of carbon dioxide than the conventional carbon dioxide absorbents.

In some embodiments of the invention, R₁, R₂, R₃, R₄ and R₅ are each independently hydrogen or C₁-C₆ straight-chain or branched alkyl; preferably hydrogen or C₁-C₄ straight-chain or branched alkyl; more preferably hydrogen, methyl or ethyl.

When R₁, R₂, R₃, R₄ and R₅ are each independently hydrogen, the imidazole cation is 3-etheroxy-1-aminoimidazole cation.

In some embodiments of the invention, the sum of said component A and said component B is 25-40wt%, preferably 30-35wt%, based on the total mass of the absorbent.

In some embodiments of the present invention, the mass ratio of said component A and said component B is 1: (0.8-2.5), preferably 1: (1-1.5).

According to some embodiments of the invention, said component A is 12-15wt%, preferably 13-14wt%, and said component B is 12-30wt%, preferably 13-20wt%, based on the total mass of the absorbent.

In some embodiments of the invention, the alcohol in the aqueous solution of alcohol is one or more selected from the group consisting of propylene glycol, ethanol and ethylene glycol.

In some embodiments of the present invention, the solvent is an aqueous ethanol solution with a volume concentration of 8-12%, further preferably an aqueous ethanol solution with a volume concentration of 10%.

The third aspect of the invention provides use of the aforementioned in capturing carbon dioxide.

The absorbent of the invention may also be used for capturing carbon dioxide from a high pressure gas source. The absorbent of the present invention has a higher acid gas load and a higher carbon dioxide capture rate than the conventional high pressure gas source carbon dioxide absorbents. The absorbent of the invention can effectively overcome the defects of low selectivity, low acid gas load, high solvent loss of the conventional method for capturing CO₂ from a high pressure gas source, improve selectivity and acid gas load and reduce energy consumption during the process of capturing CO₂ from a high pressure gas source.

The fourth aspect of the present invention provides a method of capturing carbon dioxide, the method comprises: capturing carbon dioxide with the aforementioned absorbent.

In some embodiments of the invention, the capturing temperature is within the range of 20-80°C, such as 20°C, 30°C, 40°C, 50°C, 60°C, 70°C, 80°C, and any value within the range consisting of two numerical values thereof, within the range of 30-70°C.

In some embodiments of the present invention, the method further comprises: regenerating the absorbent absorbed with carbon dioxide after the capturing process is complete to release carbon dioxide.

In some embodiments of the invention, the regeneration temperature is within the range of 60-120°C, such as 60°C, 65°C, 70°C, 75°C, 80°C, 85°C, 90°C, 100°C, 110°C, 120°C, and any value within the range consisting of two numerical values thereof, preferably within the range of 65-80°C.

In particular, the method mainly comprises the following steps: contacting a feed gas with the absorbent of the invention, absorbing carbon dioxide into the absorbent solution to form a rich solution, and heating and regenerating the rich solution with absorbed carbon dioxide to produce a carbon dioxide product and a lean solution, then subjecting the lean solution to the recycling and absorption.

The present invention will be described in detail below with reference to examples, but the protection scopes of the invention are not limited to the following description. Unless otherwise specified in the Examples and Comparative Examples, the specific conditions are selected according to the conventional conditions or the conditions suggested by the manufactures. The reagents or instruments are commercially available conventional products, if the manufactures are not indicated in the invention.

In the following Examples and Comparative Examples,
The acid gas load of the lean solution was measured by a carbon dioxide generator.

The regeneration energy consumption was reflected by the regeneration temperature, which was measured by a thermometer, the high regeneration temperature indicated that the required regeneration thermal energy was high, resulting in high regeneration energy consumption.

Selectivity was represented by acid gas load, under the circumstance that the feed gas carbon dioxide content and flow rate were constant, a higher acid gas load indicated better selectivity.

### Example 1

The composition of the carbon dioxide absorbent: 14wt% of an ionic liquid, 17wt% of N-methyldiethanolamine (MDEA), and 69wt% of an aqueous ethanol solution with a concentration of 10vol%; wherein the cation of the ionic liquid was 3-etheroxy-1-aminoimidazole, and the anion was lysine anion.

The preparation method of carbon dioxide absorbent included the following steps:
(1) The preparation of 3-etheroxy-1-aminoimidazole lysine ionic liquid: the equimolar 3-aminoimidazole and etheroxy bromide were accurately weighted, and dissolved in absolute ethanol at room temperature, the mixture was placed a three necked flask, which was then placed in a water bath thermostatic bath in a fuming cupboard. The stirring and reflux reaction was performed under the protection of N₂ and the room temperature condition. After the reaction was finished, the ethanol was evaporated in reduced pressure using a rotary evaporator at 40°C, and the residue was dissolved in deionized water. KOH solids were added in 10 batches under the stirring condition, and the reaction system was exothermic. After the addition of KOH was complete, the reaction was continued for 60min under the stirring condition, the water was evaporated in reduced pressure using a rotary evaporator at 60°C, imidazole bromide was extracted with ethanol-tetrahydrofuran, and the ethanol-tetrahydrofuran was evaporated in reduced pressure. The products obtained after the reduced pressure distillation were mixed with 2 volumes of ethanol-water, 1.1 molar amount of lysine was added, the heating reaction was carried out at 30°C for 24h, the reaction product was taken out and cooled to room temperature, filtered, the filtrate was evaporated to dryness, then extracted with absolute ethanol, and filtered, and the resulting filtrate was subjected to rotary evaporation to remove ethanol to obtain the 3-etheroxy-1-aminoimidazole lysine ionic liquid.
(2) The MDEA was initially mixed with 10vol% aqueous ethanol solution to form a mixture; and the 3-etheroxy-1-aminoimidazole ionic liquid obtained in step (1) was then added to obtain a carbon dioxide absorbent.

Use of the carbon dioxide absorbent: the obtained carbon dioxide absorbent was used for capturing carbon dioxide, the mixed gas pressure was 0.5MPa, room temperature, the content of CO₂ in the gas source was 13.0% by volume, and the balance was N₂.

Capturing carbon dioxide: 200mL of the absorbent was weighed and placed in an absorption bottle, subjected to the magnetic force stirring, the absorption temperature was controlled to 40°C, gas was then slowly introduced, the gas flow rate was controlled to 250mL/min, 1mL of the absorbent was taken at intervals and analyzed by using a carbon dioxide generator until the molar content of carbon dioxide in the absorbent was unchanged. Upon detection, the time to reach the final equilibrium of the absorption was measured to be 45min, and the absorbed carbon dioxide was 1.5 mol CO₂/mol solvent. The absorbent was then regenerated at 65°C to achieve a regeneration rate of 61.2%, the results were shown in Table 1.

### Examples 2-7

The absorbents were prepared according to the method of Example 1, except that the contents of the ionic liquid and N-methyldiethanolamine (MDEA) were different, the specific contents were illustrated in Table 1, the balance was an aqueous ethanol solution with a concentration of 10vol%. The results were shown in Table 1.

### Example 8

The absorbent was prepared according to the method of Example 1, except that the composition of the carbon dioxide absorbent was as follows: 14wt% of an ionic liquid, 17wt% of triethanolamine, and 69wt% of an aqueous ethanol solution with a concentration of 10vol%; wherein the cation of the ionic liquid was 3-etheroxy-1-aminoimidazole, and the anion was lysine anion.

### Example 9

The absorbent was prepared according to the method of Example 1, except that the composition of the carbon dioxide absorbent was as follows: 14wt% of an ionic liquid, 17wt% of aminoethyllethanolamine, and 69wt% of an aqueous ethanol solution with a concentration of 10vol%; wherein the cation of the ionic liquid was 3-etheroxy-1-aminoimidazole, and the anion was lysine anion.

### Example 10

The absorbent was prepared according to the method of Example 1, except that the cation of the ionic liquid was 3-etheroxy-l-aminoimidazole cation, and the anion was alanine anion. The results were shown in Table 1.

Wherein the preparation method of 3-etheroxy-1-aminoimidazole alanine ionic liquid included the following steps:
The equimolar 3-aminoimidazole and etheroxy bromide were accurately weighted, and dissolved in absolute ethanol at room temperature, the mixture was placed a three necked flask, which was then placed in a water bath thermostatic bath in a fuming cupboard. The stirring and reflux reaction was performed under the protection of N₂ and the room temperature condition. After the reaction was finished, the ethanol was evaporated in reduced pressure using a rotary evaporator at 40°C, and the residue was dissolved in deionized water. KOH solids were added in 10 batches under the stirring condition, and the reaction system was exothermic. After the addition of KOH was complete, the reaction was continued for 60min under the stirring condition, the water was evaporated in reduced pressure using a rotary evaporator at 60°C, imidazole bromide was extracted with ethanol-tetrahydrofuran, and the ethanol-tetrahydrofuran was evaporated in reduced pressure. The products obtained after the reduced pressure distillation were mixed with 2 volumes of ethanol-water, 1.1 molar amount of alanine was added, the heating reaction was carried out at 30°C for 24h, the reaction product was taken out and cooled to room temperature, filtered, the filtrate was evaporated to dryness, then extracted with absolute ethanol, and filtered, and the resulting filtrate was subjected to rotary evaporation to remove ethanol to obtain the 3-etheroxy-1-aminoimidazole alanine ionic liquid.

### Example 11

The absorbent was prepared according to the method of Example 1, except that the cation of the ionic liquid was 3-etheroxy-1-aminoimidazole cation, and the anion was sarcosine anion. The results were shown in Table 1.

Wherein the preparation method of 3-etheroxy-1-aminoimidazole sarcosine ionic liquid included the following steps:
The equimolar 3-aminoimidazole and etheroxy bromide were accurately weighted, and dissolved in absolute ethanol at room temperature, the mixture was placed a three necked flask, which was then placed in a water bath thermostatic bath in a fuming cupboard. The stirring and reflux reaction was performed under the protection of N₂ and the room temperature condition. After the reaction was finished, the ethanol was evaporated in reduced pressure using a rotary evaporator at 40°C, and the residue was dissolved in deionized water. KOH solids were added in 10 batches under the stirring condition, and the reaction system was exothermic. After the addition of KOH was complete, the reaction was continued for 60min under the stirring condition, the water was evaporated in reduced pressure using a rotary evaporator at 60°C, imidazole bromide was extracted with ethanol-tetrahydrofuran, and the ethanol-tetrahydrofuran was evaporated in reduced pressure. The products obtained after the reduced pressure distillation were mixed with 2 volumes of ethanol-water, 1.1 molar amount of sarcosine was added, the heating reaction was carried out at 30°C for 24h, the reaction product was taken out and cooled to room temperature, filtered, the filtrate was evaporated to dryness, then extracted with absolute ethanol, and filtered, and the resulting filtrate was subjected to rotary evaporation to remove ethanol to obtain the 3-etheroxy-1-aminoimidazole sarcosine ionic liquid.

### Example 12

The absorbent was prepared according to the method of Example 1, except that the cation of the ionic liquid was 3-etheroxy-1-aminoimidazole cation, and the anion was valine anion. The results were shown in Table 1.

Wherein the preparation method of 3-etheroxy-l-aminoimidazole valine ionic liquid included the following steps:
The equimolar 3-aminoimidazole and etheroxy bromide were accurately weighted, and dissolved in absolute ethanol at room temperature, the mixture was placed a three necked flask, which was then placed in a water bath thermostatic bath in a fuming cupboard. The stirring and reflux reaction was performed under the protection of N₂ and the room temperature condition. After the reaction was finished, the ethanol was evaporated in reduced pressure using a rotary evaporator at 40°C, and the residue was dissolved in deionized water. KOH solids were added in 10 batches under the stirring condition, and the reaction system was exothermic. After the addition of KOH was complete, the reaction was continued for 60min under the stirring condition, the water was evaporated in reduced pressure using a rotary evaporator at 60°C, imidazole bromide was extracted with ethanol-tetrahydrofuran, and the ethanol-tetrahydrofuran was evaporated in reduced pressure. The products obtained after the reduced pressure distillation were mixed with 2 volumes of ethanol-water, 1.1 molar amount of valine was added, the heating reaction was carried out at 30°C for 24h, the reaction product was taken out and cooled to room temperature, filtered, the filtrate was evaporated to dryness, then extracted with absolute ethanol, and filtered, and the resulting filtrate was subjected to rotary evaporation to remove ethanol to obtain the 3-etheroxy-1-aminoimidazole valine ionic liquid.

### Example 13

The absorbent was prepared according to the method of Example 1, except that the aqueous ethanol solution with a concentration of 10vol% was replaced with the aqueous ethanol solution with a concentration of 5vol%. The results were shown in Table 1.

### Example 14

The absorbent was prepared according to the method of Example 1, except that the aqueous ethanol solution with a concentration of 10vol% was replaced with the aqueous ethanol solution with a concentration of 8vol%. The results were shown in Table 1.

### Comparative Example 1

The absorbent was prepared according to the method of Example 1, except that the composition of the carbon dioxide absorbent: 31wt% of N-methyldiethanolamine (MDEA), and 69wt% of an aqueous ethanol solution with a concentration of 10vol%. The results were shown in Table 1.

### Comparative Example 2

The absorbent was prepared according to the method of Example 1, except that the composition of the carbon dioxide absorbent: 31wt% of an ionic liquid, and 69wt% of an aqueous ethanol solution with a concentration of 10vol%; wherein the cation of the ionic liquid was 3-etheroxy-1-aminoimidazole cation. and the anion was lysine anion. The results were shown in Table 1.

### Comparative Example 3

The absorbent was prepared according to the method of Example 1, except that the ionic liquid was a bis-aminoimidazole alanine ionic liquid. The absorption amount of CO₂ was 1.13mol CO₂/mol solvent, and the results were shown in Table 1.

### Comparative Example 4

The absorbent was prepared according to the method of Example 1, except that the carbon dioxide absorbent was composed of 31wt% of 2-amino-2-methyl-1-propanol (AMP) and 69wt% of an aqueous ethanol solution with a concentration of 10vol%. The absorption amount of CO₂ was 0.97mol CO₂/mol solvent, the results were shown in Table 1.

### Comparative Example 5

The absorbent was prepared according to the method of Example 1, except that the ionic liquid was 3-etheroxy-1-aminomethylimidazole lysine ionic liquid. The absorption amount of CO₂ was 1.12mol CO₂/mol solvent, and the results were shown in Table 1.

### Comparative Example 6

The absorbent was prepared according to the method of Example 1, except that the ionic liquid was 3-etheroxy-1-aminoethylimidazole lysine ionic liquid. The absorption amount of CO₂ was 1.22mol CO₂/mol solvent, and the results were shown in Table 1.

### Comparative Example 7

The absorbent was prepared according to the method of Example 1, except that the carbon dioxide absorbent was composed of 14wt% of an ionic liquid, 17wt% of N-methyldiethanolamine (MDEA), and 69wt% of water; wherein the cation of the ionic liquid had a structure represented by formula (2), and the anion was lysine anion. The results were shown in Table 1.

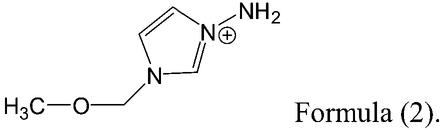

### Comparative Example 8

The absorbent was prepared according to the method of Example 1, except that the carbon dioxide absorbent was composed of 14wt% of an ionic liquid, 17wt% of N-methyldiethanolamine (MDEA), and 69wt% of water; wherein the cation of the ionic liquid had a structure represented by formula (3), and the anion was lysine anion. The results were shown in Table 1.

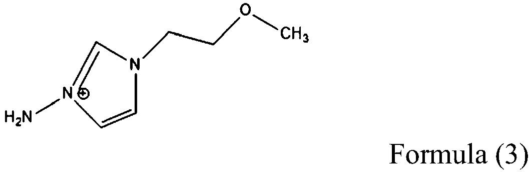

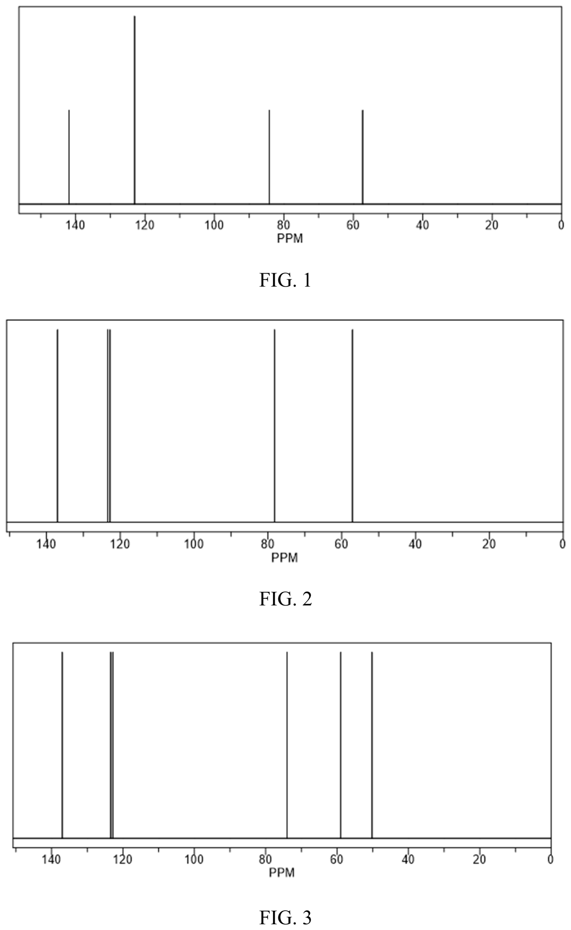

The carbon dioxide absorbent obtained in Example 1 was tested by the nuclear magnetic resonance carbon spectroscopy to obtain a nuclear magnetic resonance carbon spectrogram as shown in FIG. 1. The carbon dioxide absorbent obtained in Comparative Example 7 was tested by the nuclear magnetic resonance carbon spectroscopy to obtain a nuclear magnetic resonance carbon spectrogram as shown in FIG. 2. The carbon dioxide absorbent obtained in Comparative Example 8 was tested the nuclear magnetic resonance carbon spectroscopy to obtain a nuclear magnetic resonance carbon spectrogram as shown in FIG. 3. As can be seen from the comparison of FIG. 1 and FIG. 2, the C atom between two N atoms on an imidazole ring, and CH₂ and CH₃ on etheroxyl groups in two structures of the carbon dioxide absorbent had different chemical shifts and can be clearly distinguished. As illustrated by a comparison of FIG. 2 and FIG. 3, the carbon atoms associated with N⁺ had different chemical shifts, the chemical shift in FIG. 2 was 78.2ppm, the chemical shift in FIG. 3 was 50ppm, and another peak was presented at the chemical shift of 74ppm in FIG. 3 due to an existence of one more carbon atom.

### Comparative Example 9

The absorbent was prepared according to the method of Example 1, except that the carbon dioxide absorbent was composed of 14wt% of an ionic liquid, 17wt% of N-methyldiethanolamine (MDEA), and 69wt% of an aqueous ethanol solution with a concentration of 1vol%; wherein the cation of the ionic liquid was 3-etheroxy-l-aminoimidazole cation, and the anion was lysine anion. The results were shown in Table 1.

### Comparative Example 10

The absorbent was prepared according to the method of Example 1, except that the carbon dioxide absorbent was composed of 14wt% of an ionic liquid, 17wt% of N-methyldiethanolamine (MDEA) and 69wt% of water; wherein the cation of the ionic liquid was 3-etheroxy-l-aminoimidazole cation, and the anion was lysine anion. The results were shown in Table 1.

**Table 1**

| No. | Content of component A (wt%) | Content of component B (wt%) | Acid gas load (mol CO₂ /mol absorbent) | Content of carbon dioxide in tail gas (ppm) | Regeneration temperature °C |
|---|---|---|---|---|---|
| Example 1 | 14 | 17 | 1.53 | <50 | 65 |
| Example 2 | 13 | 18 | 1.51 | <50 | 67 |
| Example 3 | 15 | 16 | 1.45 | <50 | 69 |
| Example 4 | 15 | 13 | 1.38 | <50 | 70 |
| Example 5 | 12 | 12 | 1.31 | <50 | 65 |
| Example 6 | 12 | 30 | 1.37 | <50 | 72 |
| Example 7 | 15 | 12 | 1.30 | <50 | 68 |
| Example 8 | 14 | 17 | 1.35 | <50 | 69 |
| Example 9 | 14 | 17 | 1.33 | <50 | 80 |
| Example 10 | 14 | 17 | 1.32 | <50 | 67 |
| Example 11 | 14 | 17 | 1.30 | <50 | 70 |
| Example 12 | 14 | 17 | 1.23 | <50 | 71 |
| Example 13 | 14 | 17 | 1.35 | <50 | 65 |
| Example 14 | 14 | 17 | 1.25 | <50 | 70 |
| Comparative Example 1 | 0 | 31 | 0.76 | 200 | 98 |
| Comparative Example 2 | 31 | 0 | 0.88 | 200 | 85 |
| Comparative Example 3 | 14 | 17 | 0.99 | 100 | 90 |
| Comparative Example 4 | 14 | 17 | 0.97 | 100 | 105 |
| Comparative Example 5 | 14 | 17 | 1.12 | 100 | 95 |
| Comparative Example 6 | 14 | 17 | 1.22 | 100 | 90 |
| Comparative Example 7 | 14 | 17 | 1.32 | <80 | 82 |
| Comparative Example 8 | 14 | 17 | 1.45 | <80 | 86 |
| Comparative Example 9 | 14 | 17 | 1.1 | <80 | 80 |
| Comparative Example 10 | 14 | 17 | 1.05 | <80 | 83 |

As can be seen from the results of Table 1, the absorbents prepared in Examples 1-14 of the present invention have a higher acid gas load, a lower carbon dioxide content in tail gas and a lower regeneration temperature than the absorbents prepared in Comparative Examples 1-8. As illustrated from the comparison of Example 1 with Comparative Examples 1 and 2, the absorbent in Example 1 contains both an ionic liquid and N-methyldiethanolamine, the absorbent in Comparative Example 1 does not contain an ionic liquid, and the absorbent in Comparative Example 2 does not contain N-methyldiethanolamine, as can be seen from the results, the absorbent containing both the ionic liquid and N-methyldiethanolamine provided by the present invention can produce better results, indicating that the two ingredients have synergic effects; as shown by the comparison of Example 1 with Comparative Examples 3-8, the substitution of the ionic liquid provided by the invention with other ionic liquids cannot produce the technical effects of Examples of the present invention. In summary, when an ionic liquid includes a cation being an imidazole cation and an anion being sarcosine, lysine, valine or alanine, the ionic liquid is complexed with aminoethylethanolamine, triethanolamine or N-methyldiethanolamine and an aqueous solution of alcohol, it can improve selectivity and acid gas load during carbon dioxide capture, and reduce energy consumption. As can be seen from comparison of the absorbent prepared in Example 1 with the absorbents prepared in Comparative Examples 9 and 10, the volume concentration of alcohol in an aqueous alcohol solution of the solvent had a significant influence on each of the acid gas load, the carbon dioxide content in tail gas, and the regeneration temperature.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A carbon dioxide absorbent, is **characterized in that** the absorbent comprises a component A, a component B and a solvent, wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 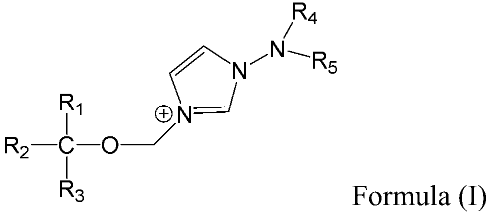 wherein R₁, R₂, R₃, R₄ and R₅ are each independently hydrogen or C₁-C₁₀ straight-chain or branched alkyl.

2. The absorbent according to claim 1, wherein R₁, R₂, R₃, R₄ and R₅ are each independently hydrogen or C₁-C₆ straight-chain or branched alkyl; preferably hydrogen or C₁-C₄ straight-chain or branched alkyl; more preferably hydrogen, methyl or ethyl.

3. The absorbent according to claim 1 or 2, wherein the sum of said component A and said component B is 25-40wt%, preferably 30-35wt%, based on the total mass of the absorbent.

4. The absorbent according to any one of claims 1-3, wherein the mass ratio of said component A and said component B is 1: (0.8-2.5), preferably 1: (1-1.5).

5. The absorbent according to any one of claims 1-4, wherein said component A is 12-15wt%, preferably 13-14wt%, and said component B is 12-30wt%, preferably 13-20wt%, based on the total mass of the absorbent.

6. The absorbent according to any of claims 1-5, wherein the alcohol in the aqueous solution of alcohol is one or more selected from the group consisting of propylene glycol, ethanol and ethylene glycol;
preferably, the solvent is an aqueous ethanol solution with a volume concentration of 8-12%.

7. A preparation method for a carbon dioxide absorbent, is **characterized in that** the preparation method comprises:
mixing a component A, a component B and a solvent to obtain a carbon dioxide absorbent; wherein the component A is an imidazole-modified amino acid ionic liquid; a cation of the ionic liquid is an imidazole cation, the imidazole cation has a structure represented by formula (I), the anion of the ionic liquid is selected from sarcosine, lysine, valine or alanine; the component B is selected from aminoethylethanolamine, triethanolamine or N-methyldiethanolamine; the solvent is an aqueous solution of alcohol, the volume concentration of alcohol in the aqueous solution of alcohol is within the range of 5-15%; 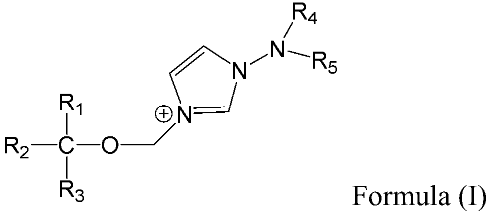
wherein R₁, R₂, R₃, R₄ and R₅ are each independently hydrogen or C₁-C₁₀ straight-chain or branched alkyl.

8. The preparation method according to claim 7, wherein R₁, R₂, R₃, R₄ and R₅ are each independently hydrogen or C₁-C₆ straight-chain or branched alkyl; preferably hydrogen or C₁-C₄ straight-chain or branched alkyl; more preferably hydrogen, methyl or ethyl.

9. The preparation method according to claim 7 or 8, wherein the sum of said component A and said component B is 25-40wt%, preferably 30-35wt%, based on the total mass of the absorbent;
and/or, the mass ratio of said component A and said component B is 1: (0.8-2.5), preferably 1: (1-1.5);
and/or, said component A is 12-15wt%, preferably 13-14wt%, and said component B is 12-30wt%, preferably 13-20wt%, based on the total mass of the absorbent.

10. The preparation method according to any one of claims 7-9, wherein the alcohol in the aqueous solution of alcohol is one or more selected from the group consisting of propylene glycol, ethanol and ethylene glycol;
preferably, the solvent is an aqueous ethanol solution with a volume concentration of 8-12%.

11. Use of the absorbent according to any one of claims 1-6 or the absorbent produced with the preparation method according to any one of claims 7-10 in capturing carbon dioxide.

12. A method of capturing carbon dioxide, is **characterized in that** the method comprises: capturing carbon dioxide with the absorbent according to any one of claims 1-6 or the absorbent produced with the preparation method according to any one of claims 7-10.

13. The method according to claim 12, wherein the capturing temperature is within the range of 20-80°C.

14. The method according to claim 12 or 13, wherein the method further comprises: regenerating the absorbent absorbed with carbon dioxide after the capturing process is complete to release carbon dioxide;
preferably, the regeneration temperature is within the range of 60-120°C.
